# EUROPÄISCHE PATENTSCHRIFT

(11) **EP 0 995 643 B1**
(45) Veröffentlichungstag und Bekanntmachung des Hinweises auf die Patenterteilung: **09.07.2003**
(21) Anmeldenummer: 99118424.3
(22) Anmeldetag: 17.09.1999
(51) Int. Cl.: B60R 21/26

(54) **Verfahren zum Aufblasen eines Airbags**
Method for inflating an airbag
Méthode de gonflage d'un coussin de sécurité

(30) Priorität: 23.10.1998 DE 19849027
(43) Veröffentlichungstag der Anmeldung: 26.04.2000
(73) Patentinhaber: Bayerische Motoren Werke Aktiengesellschaft, 80809 München (DE)
(72) Erfinder: Rank, Johann, 85301 Sünzhausen (DE)

(56) Entgegenhaltungen:
- EP-A- 0 978 424
- DE-A- 4 041 049
- US-A- 3 810 655
- US-A- 5 669 631

## Beschreibung

Die Erfindung bezieht sich auf ein Verfahren mit den Merkmalen des Oberbegriffs von Patentanspruch 1.

An die Stelle von Airbags, die einen einmalig vorzugsweise pyrotechnisch zündbaren Gasgenerator besitzen, treten zunehmend Airbags mit Gasgeneratoren, die in ihrem Leistungsverhalten steuerbar sind. Die Variation der Leistung des Gasgenerators dient dazu, eine Anpassung der Airbagwirkung an die jeweilige Unfallschwere vorzunehmen. Insbesondere befinden sich Gasgeneratoren im Einsatz, die gestuft zündbar sind. Durch den zeitlichen Abstand der Zündstufen wird das zeitliche Leistungsverhalten des Gasgenerators variierbar. Einen solchen leistungs gesteuerten zweistufigen Gasgenerator zeigt das gattungsbildende Dokument DE-A-1 961102. Weiterhin ist die Zugabe eines kühlmibteks zu den Verbrennungsgasen eines einstufigen Gasgerurators aus US-A-5669631 bekannt.

Der Erfindung liegt die Aufgabe zugrunde, ein Verfahren der eingangs genannten Art zu schaffen, durch das eine an den jeweilige Unfall bzw. Unfalltypus noch besser angepaßte Schutzwirkung des Airbags sichergestellt ist.

Die Erfindung löst diese Aufgabe durch die Merkmale des Patentanspruchs 1.

Ergänzend oder alternativ zu den Möglichkeiten, die durch eine den zeitlichen Verlauf des Druckaufbaus beeinflussende Leistungssteuereinheit gegeben sind, wird durch die Erfindung eine zusätzliche Variation der Leistungsentfaltung des Airbags ermöglicht. Mit Hilfe des Kühlmittels ist es möglich, den Maximaldruck zu variieren. Dies betrifft sowohl die Höhe des Maximaldrucks als auch den Zeitpunkt, an dem dieses Druckmaximum erreicht wird. Die Leistungssteuerung kann beispielsweise so vorgenommen werden, daß eine zu hohe Leistungsentfaltung des Gasgenerators kompensiert wird. Bei besonderen Unfalltypen, die eine geringere Leistungsentfaltung des Airbags erfordern, kann diese Leistung bedarfsgerecht eingestellt werden.

Hierzu kann die Leistungssteuerung z.B. für einen Airbag, der in Stufen zündbar ist, dadurch variiert werden, daß der Beginn und /oder das Ende der Kühlmitteleinführung entsprechend variiert wird. Auch kann die Wirkung des Gasgenerators variabel geschwächt werden, indem die Kühlmittelmenge variiert wird. Insgesamt ergibt sich durch das Zusammenspiel von ggf. in Stufen zündbarem Gasgenerator mit der Möglichkeit, den zeitlichen Abstand der Stufen zu variieren, dem bestehenden Temperatureinfluß auf die Gasgeneratorwirkung und der Variation der Kühlmittelströmung hinsichtlich Beginn, Dauer, Ende, Menge und Mengenänderung eine ideale Anpassung der Airbagwirkung an die jeweiligen Anforderungen.

Das Kühlmittel selbst kann den jeweiligen Anforderungen hinsichtlich Kosten, Haltbarkeit, Aktivierbarkeit und Wirksamkeit entsprechen gewählt sein. Eine Möglichkeit hierfür stellt Wasser als Kühlmittel dar, das bei seiner Verdampfung der Umgebung Wärme entzieht und in idealer Weise den Anforderungen genügt.

Anhand eines Diagramms ist die Erfindung weiter erläutert. Es zeigt den mit
1 bezeichneten Druckverlauf eines konventionellen, 1-stufigen Gasgenerators eines Airbags, den mit
2 bezeichneten Druckverlauf eines 2-stufigen Gasgenerators und den mit
3 bezeichneten Druckverlauf eines 2-stufigen Gasgenerators mit der zusätzlichen Möglichkeit, ein Kühlmittel einzuführen. Der Zeitpunkt für diese Einführung fällt zusammen mit der Zündung der 2. Stufe des Gasgenerators.

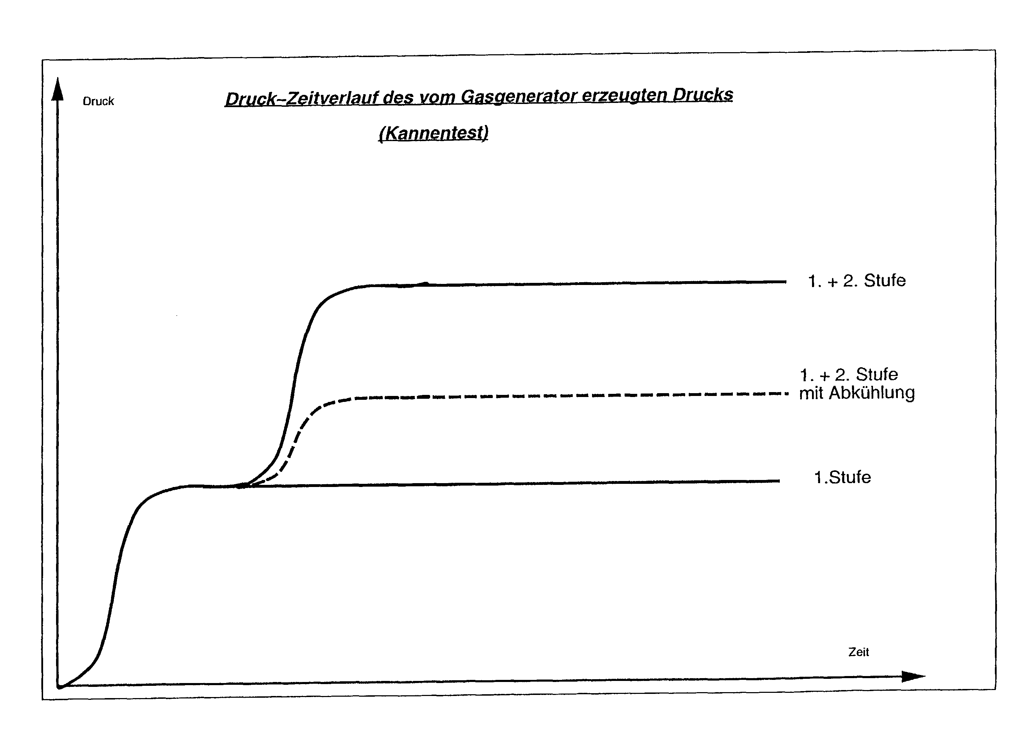

## Patentansprüche

1. Verfahren zum Zünden eines Airbags, der mit einem durch eine Leistungssteuereinrichtung gesteuerten Gasgenerator versehen ist, wobei der Gasgenerator zweistufig zündbar ist, **dadurch gekennzeichnet, dass** bei besonderen Unfalltypen, die eine geringere Leistungsentfaltung des Airbags erfordern, in der zweiten Stufe ein Kühlmittel in das aus dem Gasgenerator ausströmende Gas eingeführt wird, um die Leistungsentfaltung des Gasgenerators bedarfsgerecht zu verringern.

2. Verfahren nach Anspruch 1, **dadurch gekennzeichnet, daß** die Leistungssteuerung durch einen variablen Beginn der Einführung des Kühlmittels vorgenommen wird.

3. Verfahren nach Anspruch 1 oder 2, **dadurch gekennzeichnet, daß** die Leistungssteuerung durch eine variable Dauer der Einführung des Kühlmittels vorgenommen wird.

4. Verfahren nach einem der Ansprüche 1 oder 3, **dadurch gekennzeichnet, daß** Leistungssteuerung durch Einführen einer variablen Kühlmittelmenge vorgenommen wird.

## Claims

1. A method of detonating an airbag comprising a gas generator controlled by a power control device, wherein the gas generator is operable in two stages, **characterised in that** in special kinds of accident where less power from the airbag is required, in the second stage a coolant is introduced into the gas leaving the gas generator, in order to reduce the power of the gas generator as required.

2. A method according to claim 1, **characterised in that** the power is controlled by varying the time when the coolant begins to be introduced.

3. A method according to claim 1 or 2, **characterised in that** the power is controlled by varying the time during which the coolant is introduced.

4. A method according to claim 1 or 3, **characterised in that** the power is controlled by introducing a variable amount of coolant.

## Revendications

1. Méthode de gonflage d'un coussin de sécurité équipé d'un générateur de gaz commandé par un dispositif de commande de puissance, et pouvant présenter deux étapes de gonflage,
**caractérisée en ce que**
pour des types particuliers d'accident qui demandent au coussin un déploiement plus faible de puissance, il peut être, à la seconde étape, introduit dans le gaz sortant du générateur, un agent de refroidissement pour réduire en fonction du besoin la puissance développée par le générateur de gaz.

2. Méthode selon la revendication 1,
**caractérisée en ce que**
la commande de puissance s'effectue en faisant varier le début de l'introduction de l'agent de refroidissement.

3. Méthode selon la revendication 1 ou 2,
**caractérisée en ce que**
la commande de puissance s'effectue par une durée variable d'introduction de l'agent de refroidissement.

4. Méthode selon l'une des revendications 1 à 3,
**caractérisée en ce que**
la commande de puissance s'effectue par l'introduction d'une quantité variable d'agent de refroidissement.
